# EUROPEAN PATENT APPLICATION

(11) **EP 2 241 591 A1**
(43) Date of publication of application: **20.10.2010**
(21) Application number: 09251051.0
(22) Date of filing: 07.04.2009
(51) Int. Cl.: C08K 5/00, C08K 5/3447, C09D 5/08

(54) **Hybrid organic-inorganic corrosion inhibitors for chromate-free corrosion resistant coatings**

(71) Applicant: Research & Technology Petrochemical Company, Mollasadra 14358 (IR)
(72) Inventor: Mahdavian Ahadi, Mohammed, Vali-e-Asr Avenue Tehran (IR); Mohammadzadeh Attar, Mohammadreza, Kordestan Highway Tehran (IR)
(74) Representative: Copsey, Timothy Graham

(57) **Abstract**

A corrosion inhibitor formulation containing no chromate, or toxic compounds consist essentially of: zinc acetylacetonate and benzimidazole derivatives with the mole ratio of 100:1 to 1:100 of zinc acetylacetonate : benzimidazole derivatives. The use of the formulations in organic coatings in the range of 0.01-0.04 mol in 100g dry film increases corrosion resistance of the mild steel.

## Description

### Background of the invention

Corrosion inhibition of mild steel in neutral corrosive environment is of particular interest in oil, petrochemical and automotive industries. Chromate base inhibitors have been used for years to increase durability and corrosion resistance of mild steel in such an environment. Chromate compounds are very effective to be used in anticorrosive coatings. These compounds could increase charge transfer resistance at the metal electrolyte interface and enhance previously formed oxide layer on the metal surface. All forms of hexavalent chromium are recognized by the United States National Institute of Environmental Health Sciences as a Group I known human carcinogen. Accordingly, the use of corrosion inhibiting compounds which contain forms of hexavalent chromium are subject to stringent regulation and control. It would be very beneficial to replace hexavalent chromium with non-toxic corrosion inhibitors in pripers.

Corrosion inhibitors may have enough solubility to perform their inhibitive action in organic coatings when exposed to water. On the other hand, their solubility have to be limitted in order to avoid osmotic pressure toward the coating. Osmotic pressure build up inside the coating could lead to side effects on corrosion protection e.g. blistering, leaching and delamination. Many replacement have been suggested for chromate base pigments e.g. pigments able to form inhivitive complexes on the surface (like phosphate base pigments comprising their organic and inorganic modifications), ionexchange pigments, metal oxide pigments, conductive polymers, rust converters, volatile corrosion inhibitors and organic inhibitors. Imidazole derivatives are a class of a variety of organic inhibitors suggested for corrosion protection in formulation of aqueous solutions and polymeric matrixes.

U.S. Pat. No. 6,077,460 discloses the use of 1-amidoalkylimidazoles as corrosion inhibitors in the petrochemical industry and the process for the preparation of 1-amidoalkylimidazoles.

U.S. Pat. No. 6,228,283 claims imidazole derivatives are useful for the formulation of the antifreeze/coolant solution which is particularly suitable for diesel engine applications.

U.S. Pat. No. 5,723,061 reveals imidazole derivatives as corrosion inhibitor for the formulation of an antifreeze composition for cooling systems. It is claimed that the formulation is heat stable and particular useful as heat transfer fluids at temperatures above 150°C.

U.S. Pat. No. 6,464,899 discloses compositions and methods for inhibiting corrosion of metallic surfaces wherein the compositions are suitable for anticorrosive putty system wherein the base matrial is polymeric and some imidazole derivatives are introduced as volatile corrosion inhibitor.

The use of compounds able to form complex with imidazole derivatives could increase corrosion inhibition where coadsorption takes place. Hybrid organic-inorganic compounds having valence d orbital are theoretically useful for such an interaction. Transition metal acetylacetonate complexes are examples of these hybrid organic-inorganic compounds.

European Pat. No. EP0651073 discloses the use of palladium acetylacetonate as corrosion inhibitor for reducing corrosion of stainless steel components in a water-cooled nuclear reactor.

U.S. Pat. No. 5,672,431 declares the use of combination of chromium acetylacetonate and imidazole derivatives in epoxy resin could improve toughness and mechanical properties. However, no claim is provided for increase of anticorrosive behaviour of epoxy coatings.

The present invention relates to a corrosion resistant coating which is free of hexavalent chromium compounds wherein incorporation of zinc acetylacetonate and a benzimidazole derivatives is used to improve corrosion resistance. The use of such a combination with low percentage in polymeric coatings could eliminate the need for toxic chromate compounds and could decrease the amount of polluting pigments like phosphate base pigments which are used in formulation in relatively high percentage. Further objects and advantages of the present invention will appear hereinbelow.

### Summary of the invention

In accordance with the present invention the foregoing objects and advantages are readily obtained. The present invention is drawn to corrosion resistant coating comprising a non-chromate corrosion inhibiting additive. The coating is based on solvent-based systems consisting of two-component and one-component systems In accordance with the present invention, the non-chromate corrosion inhibiting additive comprises a organometalic complex (zinc acetylacetonate) in combination with a organic compound (benzimidazole derivatives).

### Brief Description Of The Drawings

Figure 1. Coating film resistance and coating film capacitance of epoxy-polyamide coatings during 57 days of immersion in 3.5% NaCl solution
Figure 2. Dry, wet and recovery state adhesion results of epoxy-polyamide coatings obtained by pull-off method
Figure 3. Coating film resistance and coating film capacitance of polyester-melamine coatings during 57 days of immersion in 3.5% NaCl solution
Figure 4. Dry, wet and recovery state adhesion results of polyester-melamine coatings obtained by pull-off method.

### Detailed description of the invention

Benzimidazole derivative have two nitrogen atoms in their heterocyclic ring; which are pyrrole and pyridine like nitrogen atoms. Possible anchoring sites to form chemical bonding with metal surface are nitrogen atoms with lone pair of electrons and aromatic ring. Zinc acetylacetonate (Zn(acac)₂) is an organometallic compound which is in octahedron form in aqueous solution when it reacts with two water molecules. In presence of benzimidazole derivatives reacted water is replaced by benzimidazole through new linkage with nitrogen atoms on the benzimidazole heterocyclic ring. The substitution reaction could be explained by spectrochemical series which defines ligands field strength. This leads to the idea that benzimidazole derivatives and zinc acetylacetonate mixture in polymeric coatings could increase corrosion resistance of the formulated coating.

In accordance with the present invention, the hybrid organic-inorganic corrosion inhibitor is zinc acetylacetonate and benzimidazole derivatives mixture (ZBDM). The use of the ZBDM in polymeric coatings increases corrosion resistance of the formulated coating wherein benzimidazole derivatives are compatible with selected binder system and the molar ratio of benzimidazole derivatives and zinc acetylacetonate is 1:100 to 100:1.

The formulated coating according to the present invention contains of 0.01-0.04 mol of ZBDM in 100g nonvolatile content.

In accordance with the present invention, introduction of the ZBDM to the coating matrials increase corrosion resistance of wide range of coating systems from pigmented to unpegmented and from one component to two component systems, where in the coating system could be solvent-borne or water-borne.

Depending on the type of coating system and purpose the extenders are loaded in the coating formulation 0-70% wt. of total nonvolatile content. Extenders are preferably selected from the group consisting of talc, barium sulfate, aluminium silicate and clays. On top of extenders, pigments are loaded in the coating formulation 0-70% wt. of total nonvolatile content to achieve final desired properties namely mechanical, physical, appearance and anti-corrosion resistance. Pigments are preferably selected from the group consisting of titanium dioxide, iron oxide, phosphates and silicates. According to present invention, for one component systems the benzimidazole derivative and zinc acetylacetonate are loaded to the coating material concurrently while for two component epoxy systems, preferably zinc acetylacetonate is added to epoxy component and benzimidazole derivative is added to hardener (curing agent) component.

In a preferred embodiment of the present invention, in case of waterborne epoxy formulations, the curing agent is selected from the group consisting of waterborne or water-reducible modified amine or polyamidoamine adducts. It is better to select a hydrophobic curing agent to impact water- repellency in corrosion resistance.

The chromate free corrosion resistant coating of the present invention is particularly useful in preventing general corrosion and pitting corrosion in neutral corrosive environment, wherein pH range is 6-8, on iron base substrates, particularly, mild steel. The use of the chromate free solventborne and waterborne coatings of the present invention is useful in all industries including the petrochemical;aerospace, automotive, architectural and marine industries.

The corrosion inhibiting properties of the the chromate free corrosion resistant coating of the present invention will be made clear from the following examples.

### EXAMPLE 1

Mild steel (CK15) sheets were obtained from Mobarakeh Steel Company and were abraded with a magnetic polisher to remove mill-scale, followed by degreasing with xylene and acetone. Surface roughness of polished samples was in the range of 1-5 microns peak-to-valley measured by Elcometer 223. Epoxy resin (Epikote 1001 Shell) and polyamide (Crayamide 115) were used to prepare coatings. Zinc acetylacetonate and benzimidazole were dissolved in epoxy resin and polyamide respectively. They were charged in order to obtain 1:4 molar ratio of Zn(acac)₂: benzimidazole mixture (ZBDM) with total content of 0.02 mol per 100 g nonvolatile content of coating material. Epoxy and polyamide components were mixed at stoichiometric ratio. The coating was applied on mild steel sample and allowed to be cured at room temperature for 7 days. In order to make comparison, same epoxy-polyamide coating without ZBDM was used as Blank reference sample.

### EXAMPLE 2

The mild steel samples were prepared as discribed in Example 1. Polyester (Dynapol L 210) and melamine formaldehye (Luwipal LR 8984) were used to prepare coatings.

They were mixed in 70:30 solid ratio of polyester: melamine formaldehyde resins. Zinc acetylacetonate and benzimidazole were charged in order to obtain 1:4 molar ratio of Zn(acac)₂: benzimidazole mixture (ZBDM) with total content of 0.02 mol per 100 g nonvolatile content of coating material. The coating was applied on mild steel sample and allowed to be cured at 135°C for 25 min. In order to make comparison, same polyester-melamine coating without ZBDM was used as Blank reference sample.

Evaluation method:
Corrosion protection performance of the coated mild steel was evaluated using electrochemical impedance spectroscopy (EIS). In this regard, an area of 2.25 cm² of coated mild steel with dry film thickness of 30±3 µm was selected in order to expose to the 3.5% NaCl solution. The rest areas of plates were sealed with beeswax-colophony mixture. EIS was implemented using Autolab PGSTAT12 at open circuit potential (OCP) in the frequency range of 10⁻²-10⁺⁴ Hz with 10 mV perturbation.
Reference electrode and counter electrode were silver-silver chloride and platinum, respectively.

Adhesion strength of the coated mild steel was evaluated by pull-off tensile strength (POTS ) method. Dry state adhesion was measured on unexposed coated steel. Wet state adhesion was measured on immersed samples in 3.5% NaCl solution for 30 days and POTS was carried out 5-20 min after samples were take out of solution. Recovery state adhesion was measured on immersed samples in 3.5% NaCl solution for 30 days and POTS was carried out 2 days after samples were take out of solution.

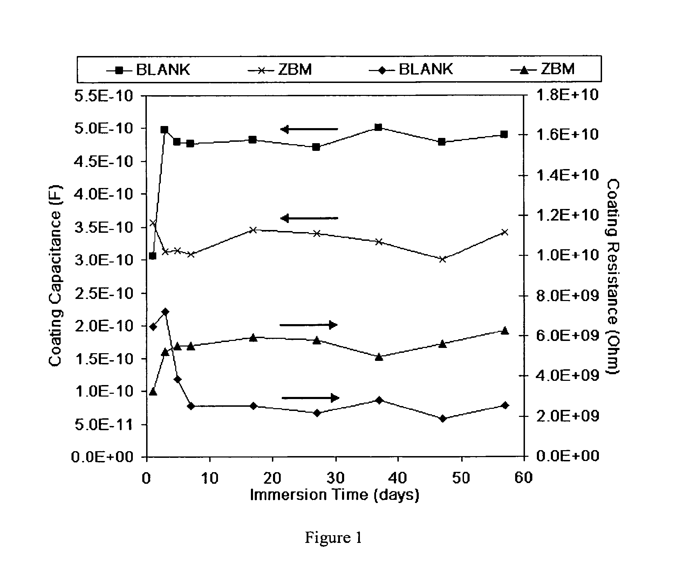

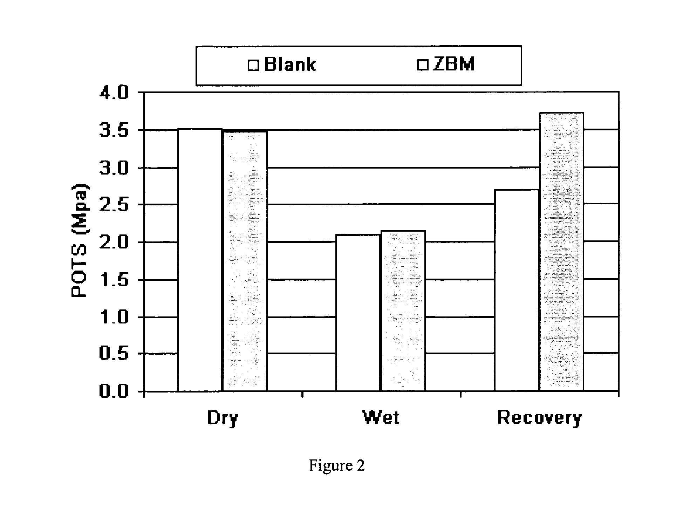

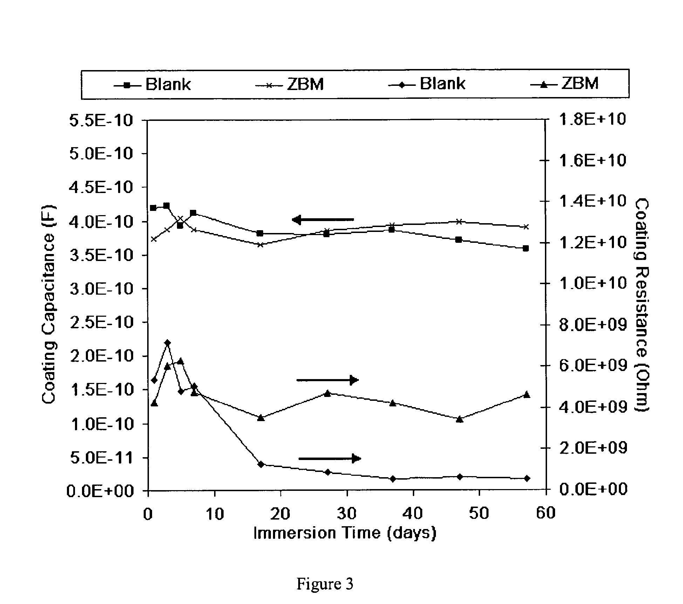

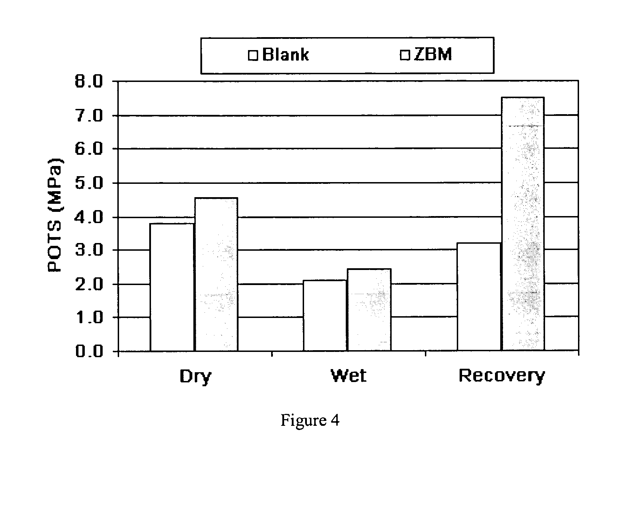

Coating film resistance and coating film capacitance are evaluted during 57 days of immersion from EIS results using approperiate equivalent electrical circuit models. The results are displayed in Fig. 1 and 3 for samples of Example 1 and 2 respectively. Detailed description on fitting EIS data with equivalent electrical circuit models are discused in the literatures. The results of dry, wet and recovery state adhesion measurements are demonstrated in Fig. 2 and 4 for samples of Example 1 and 2 respectively.

As depicted in Fig. 1 introduction of ZBDM to the solventbase epoxy-polyamide coating resuts in increase of coating resistance about 2-3 GOhm and decrease of coating capacitance about 0.2nF. It should be noted that coating water up take could lead to coating capacitance increment and coating resistance decline. On top of it decrease of coating resistance could be accelerated when accumulation of corrosion products underneath the organic coating occurs, the process which is more rapid in the case of Blank sample. Fig. 3 shows almost no change in coating film capacitance with introduction of ZBDM in polyester-melamine coating which indicates ZBDM does not significantly influence water up take of polyester-melamine coatings. However, ZBDM has significant impact on coating film resistance.

Presence of ZBDM in the organic coating leads to increased recovery state adhesion as shown in Fig. 2 and 4. Although, introduction of ZBDM in the coating has no significant impact of dry and wet state adhesion. During immersion water dissolves ZBDM in the coating and interaction of dissolved ZBDM with mild steel surface could increase effective adhesive interaction of coating-substrate interface.

## Claims

1. A corrosion resistant coating comprising: resinous binder, formulation additives, extenders and pigments and a corrosion inhibiting additive, wherein the corrosion inhibiting additive comprises (1) zinc acetylacetonate, and (2) benzimidazole derivatives.

2. A coating according to claim 1 wherein the binder is selected from solvent borne or waterborne two-component and one-component systems.

3. A coating according to claim 2 wherein said two-component system is selected from the group of epoxy-curing agent systems.

4. A coating according to claim 3 wherein said curing agent is selected from the group of polyamide and polyamine.

5. A coating according to claim 2 wherein said one-component system is selected from the resins consisting polyol functional resins as the main film former and methylol functional resins as the co-cure resin.

6. A coating according to claim 5 wherein said the main film former consisting of alkyl, polyester and acrylic resins.

7. A coating according to claim 5 wherein said the co-cure resin consisting of melamine-formaldehyde and urea formaldehyde.

8. A coating according to any preceding claim wherein the extenders are preferably selected from the group consisting of talc, barium sulfate, aluminium silicate and clays.

9. A coating according to any preceding claim wherein the extenders are used 0-70% wt. total nonvolatile content.

10. A coating according to any preceding claim wherein the pigments are preferably selected from the group consisting of titanium dioxide, iron oxide, phosphates and silicates.

11. A coating according to any preceding claim wherein the pigments are used 0-70% wt. total nonvolatile content.

12. A coating according to claim 1 said benzimidazole derivatives are compatible with the selected binder.

13. A coating according to claim 1 and 3 wherein said zinc acetylacetonate and benzimidazole derivatives are dissolved in epoxy and curing agent components respectively.

14. A coating according to claim 1 and 5 wherein said zinc acetylacetonate and benzimidazole derivatives are dissolved in the one component system simultaneously.

15. A coating according to claim 1 wherein zinc acetylacetonate (Z) and benzimidazole derivatives (B) with the mole ratio of 100:1 to 1:100 of Z:B are used in the coating.

16. A coating according to claim 1 wherein zinc acetylacetonate (Z) and benzimidazole derivatives (B) are used in the range of 0.01-0.04 mol in 100g nonvolatile content.

17. A coating according to claim 1 is particularly suitable to protect mild steel in neutral corrosive environment wherein pH range is 6-8.
